# EUROPEAN PATENT APPLICATION

(11) **EP 2 007 062 A2**
(43) Date of publication of application: **24.12.2008**
(21) Application number: 07739567.1
(22) Date of filing: 16.03.2007
(51) Int. Cl.: H04L 9/12

(54) **QUANTUM CRYPTOGRAPHY DEVICE**

(30) Priority: 16.03.2006 JP 2006072519
(71) Applicant: NEC Corporation, Minato-ku Tokyo 108-8001 (JP)
(72) Inventor: NAMBU, Yoshihiro, Minato-ku, Tokyo 1088001 (JP)
(74) Representative: MacDougall, Alan John Shaw
(86) International application number: PCT/JP2007/056126
(87) International publication number: WO 2007/105834

(57) **Abstract**

A quantum encryption device comprises a faint laser light source for generating a photon serving as a qubit information carrier, three or more asymmetric Mach-Zehnder interference systems each formed by a photonic lightwave circuit, an optical transmission path for transmitting the photon, a photo detector, a device for recording sending data of a sender and observational data of a receiver, and a classic communication path for performing classic communication with a regular user.

## Description

### Technical Field

The present invention relates to a quantum encryption device, and particularly relates to a device for performing quantum encryption key distribution wherein an encryption secret key is shared by optical fiber communication.

### Background Art

Explosive growth of the Internet, and practical realization of e-commerce have enhanced social need for encryption technology, such as communicative maintenance of secret, prevention from tampering, individual authentication, and so forth. Currently, a common key system such as DES encryption, and a public key system such as RAS (R. Rivest, A. Shamir, L. Adlman) encryption have come into widespread use. However, these are based on computational complexity stability. That is to say, the present encryption system is threatened with progress of computer hardware and decryption algorithms. Particularly, with fields requiring extremely high safety such as information relating to transactions between banks, and information relating to military affairs and diplomacy, practical realization of an encryption system which is safe in principle would have great impact.

Examples of an encryption system with which unconditional safety is proved with information theory include a one time pad system. The one time pad system are specified by using an encryption key having the same length as a communication sentence and by disposing of the encryption key only one time. A proposal has been made by Bennet and others for the first time about a specific protocol wherein an encryption secret key for use in the one time pad method is distributed in a safe manner and which is currently widely known as BB84 protocol with IEEE Int., Conf., on Computers, Systems, and Signal Processing, Bangalore, India, written by Bennett and Brassard, p. 175 (1984) (Non-patent Document 1). This has touched off widespread quantum encryption studies. With quantum encryption, a physical law guarantees the safety of encryption, so ultimate safety guarantee can be realized independent of the limit of the capabilities of a computer. With a quantum encryption device currently well-studied, information of one bit is encoded in a single-photon state, and is transmitted. This is because photons are robust as to turbulence from the environment as compared with other quantum systems, and also a long-distanced encryption key distribution can be expected by utilizing existing optical fiber communication technology.

With a quantum encryption device of which the safety has been proved theoretically, as described in Non-patent Document 1, the two distinguishable states of a quantum mechanical two-degree-of-freedom system, and a state conjugated therewith (a state overlapped therewith) are employed, thereby transmitting a secret key safely. A protocol has been designed such that eavesdropping actions cause turbulence to occur as to a quantum mechanical state, and leakage information amount can be estimated from an error of the data of regular senders and receivers. A quantum state employed for such information communication is frequently referred to as quantum information. A quantum mechanical two-degree-of-freedom system serving as quantum information is referred to as a qubit, and is equivalent to a spin 1/2 system mathematically. The related art will be described below in a case wherein a physical system serving as an information carrier is a photon.

The related art will be described below regarding an encryption key distribution device which employs a photon as a qubit carrier and an optical fiber for long-distanced transmission as a transmission path and which relates to the present invention. The details regarding a quantum encryption device employing photons are described in "Experimental Quantum Cryptography" written by Zbinden and others, "INTRODUCTION TO QUANTUM COMPUTATION AND INFORMATION" written and edited by Lo and others (World Scientific, published in 1998), p. 120 (Non-patent Document 2), "Quantum Cryptography" written by Ekert and others, "The Physics Quantum Information" written and edited by Bouwmeester and others (Springer, published in 2000), p. 15 (Non-patent Document 3), "Quantum Cryptography" written by Gisin and others, Review of Modern Physics, No. 74 (published in 2002), pp. 145-195 (Non-patent Document 4).

In Non-patent Document 1, a proposal has been proposed about implementation of a quantum encryption device of polarization coding, wherein information is encoded to two polarization states which a photon can have. Note however, polarization coding needs real-time control and compensation of polarization rotation within a transmission path, so is not frequently employed as a method for implementing a long-distanced encryption key distribution system employing an optical fiber as a transmission path. As a long-distanced encryption key distribution system, a proposal has been also made by Bennett and others about implementation of a quantum encryption device of phase coding wherein information is encoded to relative phase between two continuous faint light pulses.

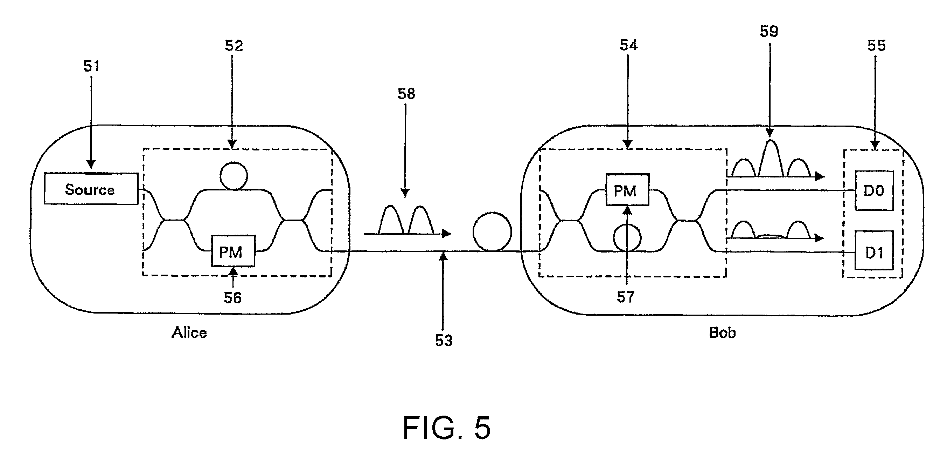

Fig. 5 illustrates a typical embodiment of the quantum encryption devices by phase coding described in Non-patent Documents 2 through 4. This device employs an optical interference system having a configuration wherein two asymmetric Mach-Zehnder interference systems are connected in series through an optical fiber transmission path. A faint short pulse generated at a faint laser light source (51) provided on the transmission side is input to an asymmetric Mach-Zehnder interference system (52), thereby preparing coherent two continuous faint pulses (58) spatially separated by the optical path difference between long and short length optical paths thereof on the optical fiber transmission path. Now, the term "coherent" means that relative phase between the two pulses of the two continuous faint light pulses can be clearly defined by the asymmetric Mach-Zehnder interference system (52) wherein the optical path difference between long and short length optical paths has been clearly defined. The two continuous faint light pulses (58) receive turbulence during transmission on the optical fiber transmission path, but the relative phase relation among them, and the relation of polarization planes are saved, and provided to the asymmetric Mach-Zehnder interference system (54) on the reception side.

The two continuous faint light pulses (58) are converted into three continuous faint light pulses (59) by the asymmetric Mach-Zehnder interference system (54), and are output to two ports on the downstream side. The presence of a photon included in central light pulses of the three continuous faint light pulses (59) output to the two downstream ports of the asymmetric Mach-Zehnder interference system (54) is distinguished and recorded.

Of the three continuous faint light pulses (59), light pulses which contribute to the central light pulses are light pulses passing through the long length of the asymmetric Mach-Zehnder interference system on the transmission side, and passing through the short length on the reception side, and light pulses passing through the short length on the transmission side, and passing through the long length on the reception side. An output light intensity ratio between the two output ports depends on the optical delay (relative phase) of the two continuous faint light pulses (58) in a sinusoidal function manner due to interference of the two contributing two light pulses.

With this optical interference system, modulation is applied to the optical delay (relative phase) of the two continuous faint light pulses (58), whereby encryption key distribution can be performed based on the principle of quantum encryption.

For the sake of this, while light pulses passing through the asymmetric Mach-Zehnder interference system (52) on the transmission side, four-value phase modulation {0, π/2, π, 3π/2} is performed with a phase modulator (56) included in the transmission side, and while two continuous pulses after transmission of the optical fiber (53) passing through the asymmetric Mach-Zehnder interference system (54) on the reception side, two-value phase modulation {0, π/2} is performed with a phase modulator (57) included in transmission side.

Optical delay at the asymmetric Mach-Zehnder interference systems (52) and (54) is appropriately adjusted, thereby executing a quantum encryption key distribution protocol employing nonorthogonal four states proposed in Non-patent Document 1, and enabling safe key distribution to be performed.

A quantum encryption device based on such phase coding is compatible with the optical fiber transmission path (53), thereby yielding an advantage wherein long-distanced key distribution can be performed, but this device includes a problem wherein the relative optical delay of the asymmetric Mach-Zehnder interference systems (52, 54) which a sender and receiver have, respectively, needs to be maintained with precision equivalent to a light wavelength.

The optical delay of the asymmetric Mach-Zehnder interference systems (52, 54) disposed in a manner distributed to the sender and receiver, respectively, sways or drifts independently due to change in temperature or other causes, so light interference effects are readily eliminated.

In order to solve this problem, an active control device is needed wherein change in the relative optical delay of both asymmetric Mach-Zehnder interference systems (52, 54) is measured, the measurement results are fed back to maintain the relative optical delay uniformly. Such a measuring device itself complicates the system, and also reference light employed for measurement increases system noise, and becomes a cause of deterioration in performance of the quantum encryption device.

In order to such a problem, in recent years, a quantum encryption device to which planar lightwave circuit (PLC) technology has been applied has been devised and developed, as described in "BB84 Quantum Key Distribution System Based on Silic-Based Planar Lightwave Circuits" written by Nanbu and others, Japan Journal of Applied Physics, No. 43 (published in 2004), p. L1109 (Non-patent Document 5), "Single-photon Interference over 150 km Transmission Using Silica-based Integrated-optic Interferometers for Quantum Cryptography" written by Kimura and others, Japan Journal of Applied Physics, No. 43 (published in 2004), p. L1217 (Non-patent Document 6). With this quantum encryption device, an asymmetric Mach-Zehnder interference system is fabricated on a silicone substrate using an optical waveguide formed with patterning, thereby yielding an advantage wherein a stable optical interference system not affected by disturbance can be realized only by passive control such as temperature control, and a low-noise system can be constructed.

Note however, in the case of implementation employing the PLC, the current technology includes a problem wherein a low-loss asymmetric Mach-Zehnder interference system including a phase modulator such as described above cannot be readily fabricated. Even though increase in cost is no problem, increase in optical loss of the device is directly connected to deterioration in performance of a quantum encryption device employing faint light as information carriers, so this is an unacceptable problem.

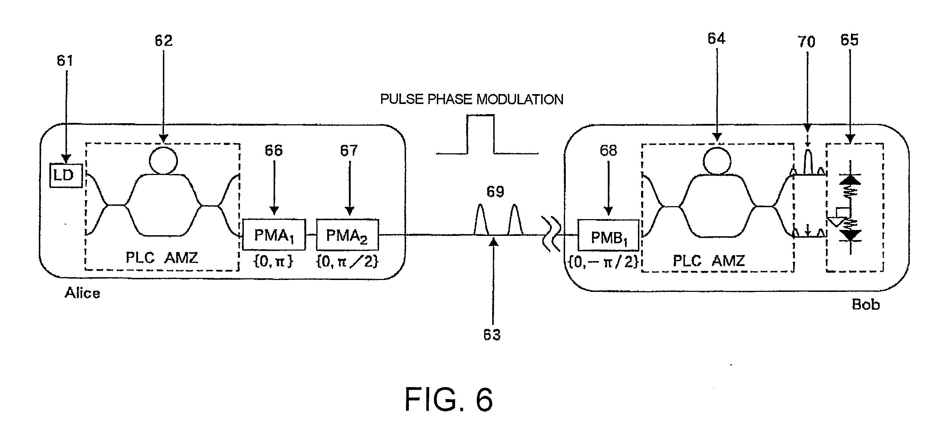

In order to solve this problem, a quantum encryption device such as shown in Fig. 6 wherein a phase modulator is disposed outside an asymmetric Mach-Zehnder interference system has been devised and developed.

With this device, faint short pulses generated at a faint laser light source (61) provided on the transmission side are input to an asymmetric Mach-Zehnder interference system (62) made up of the PLC on the transmission side, thereby preparing coherent two continuous faint light pulses (69) spatially separated by the optical path difference between long and short length optical paths thereof on the optical fiber transmission path. The two continuous faint light pulses (69) are transmitted on the optical fiber transmission path (63). The two continuous faint light pulses (69) are converted into three continuous faint light pulses (70) by an asymmetric Mach-Zehnder interference system (64) on the reception side made up the PLC, and output to two ports on the downstream side. The presence of photons included in the central pulses of the three continuous faint light pulses (70) to be output to the two downstream ports of the asymmetric Mach-Zehnder interference system (64) is distinguished and recorded.

In this case, phase modulators (PMA1, PMA2) (66, 67) are inserted serially in the downstream of an asymmetric Mach-Zehnder interference system (62) on the transmission side, as shown in Fig. 6. A pulse-like modulation signal is applied to these phase modulators (PMA1, PMA2) (66, 67) in sync with the two continuous faint light pulses (69) passing through each of the modulators, thereby selectively applying the four values of phase modulation of {0, π/2, π, 3π/2} to one pulse of the two continuous faint light pulses (69), and applying the four values of modulation to the optical delay (relative phase) of the two continuous faint light pulses (69).

On the other hand, a pulse-like modulation signal is also applied to a phase modulator (PMB1) (68) inserted serially in the upstream of the asymmetric Mach-Zehnder interference system (64) on the reception side in sync with the two continuous faint light pulses (69) passing through the modulator, thereby selectively applying the two values of phase modulation of {0, π/2} to one pulse of the two continuous faint light pulses (69), and applying the two values of modulation to the optical delay (relative phase) of the two continuous faint light pulses (69).

The optical delay of the asymmetric Mach-Zehnder interference systems (62) and (64) on the transmission side and reception side is adjusted, thereby executing a quantum encryption key distribution protocol employing nonorthogonal four states proposed in Non-patent Document 1 in the same way as with the quantum encryption device shown in Fig. 5, and accordingly, safe key distribution can be performed.

The quantum encryption device employing the above-mentioned PLC is confirmed to have functioned, but pulse-like phase modulation needs to be performed so as to perform the phase modulation of two continuous faint light pulses, which complicates the device. For example, the optical path difference between the long length and short length optical paths of an asymmetric Mach-Zehnder interference system is typically around five nanoseconds, and a pulse-like modulation device of one-nanosecond order is needed to selectively apply phase modulation to one pulse of the two continuous faint light pulses.

Therefore, a high-precision signal synchronization system for applying pulse modulation in sync with passage of a light pulse is needed, and accordingly, adjustment thereof cannot be readily performed. Also, when considering the optical loss of a phase modulator to be inserted, it is desirable to eliminate the necessity of phase modulators or reduce the number of phase modulators.

### Disclosure of Invention

### Problems to be Solved by the Invention

The quantum encryption devices disclosed in the above-mentioned Non-patent Documents 2 through 4, and Non-patent Documents 5 and 6 include a problem regarding both of asymmetric Mach-Zehnder interference systems and phase modulators. Further, the quantum encryption devices by phase coding according to the related art shown in Non-patent Documents 1 through 4 need to maintain the relative difference of the optical path length of two asymmetric Mach-Zehnder interference systems over a prolonged period of time, and accordingly, an active control device is needed for the sake thereof, which complicates the devices.

This problem can be avoided by the two asymmetric Mach-Zehnder interference systems being configured of the PLC, such as shown in Non-patent Documents 5 and 6, but this requires pulse like phase modulation for signal modulation and the high-precision synchronizing signal system thereof, and accordingly, adjustment thereof is complicated. That is to say, even if either implementation is selected, complication of the device cannot be readily avoided.

The present invention has been made in light of the problems held by the above-mentioned related art, and the object thereof is to provide a quantum encryption transmission device wherein a device to be possessed by a regular user can have a more simple configuration than that of the related art.

### Means for Solving the Problems

A quantum encryption device according to a first aspect of the present invention comprises a faint laser light source for generating a photon serving as a qubit information carrier, three or more asymmetric Mach-Zehnder interference systems formed by a photonic lightwave circuit (PLC), an optical transmission path for transmitting the photon, a photo detector, a device for recording sending data of a sender and observational data of a receiver, and a classic communication path for performing classic communication with a regular user.

A quantum encryption device according to a second aspect of the present invention comprises a faint coherent light source for generating a photon serving as a qubit information carrier, two or more asymmetric Mach-Zehnder interference systems each formed by a photonic lightwave circuit (PLC), a polarization beam splitter or polarization switch for switching a polarization plane, a polarization plane scrambler or polarizer for disturbing a polarization plane on an optical transmission path, an optical transmission path for transmitting the photon, a photo detector, a device for recording sending data of a sender and observational data of a receiver, and a classic communication path for performing classic communication with a regular user.

The quantum encryption device according to the present invention is characterized in that asymmetric Mach-Zehnder interference systems each formed by a PLC are employed, so as to dispense with an active control device for maintaining the relative difference of the optical lengths of the asymmetric Mach-Zehnder interference systems, together with a high-speed high-precision signal modulation device.

With the first embodiment of the present invention, three or more asymmetric Mach-Zehnder interference systems each formed by a PLC are employed, so as to dispense with the signal modulation device of a sender or receiver or both.

With the second embodiment of the present invention, an asymmetric Mach-Zehnder interference system, a polarization beam splitter or polarization switch for switching a polarization plane 90 degrees, and a polarization plane scrambler or polarizer are employed together, thereby replacing a high-speed high-precision phase modulation device necessary for a sender or receiver or both with a low-speed low-precision polarization plane modulator.

### Advantages

According to the present invention, the configuration of a device to be possessed by a regular user can be simplified, and handling thereof can be readily performed. Accordingly, economic and technologic burden for the device of a regular user and operation of the device can be extremely reduced as compared to the quantum encryption devices disclosed in Non-patent Documents 1 through 6.

### Brief Description of the Drawings

Fig. 1 is a configuration diagram illustrating a quantum encryption device according to a first embodiment of the present invention.
Fig. 2 is a configuration diagram illustrating a quantum encryption device according to a second embodiment of the present invention.
Fig. 3 is a configuration diagram illustrating a quantum encryption device according to a third embodiment of the present invention.
Fig. 4 is a configuration diagram illustrating a quantum encryption device according to a fourth embodiment of the present invention.
Fig. 5 is a configuration diagram illustrating an example of a quantum encryption device according to the related art.
Fig. 6 is a configuration diagram illustrating another example of a quantum encryption device according to the related art.

### Best Mode for Carrying Out the Invention

Next, description will be made in detail regarding embodiments of the present invention with reference to the drawings.

Embodiments of the present invention will be described below in detail with reference to the drawings. In connection with the following embodiments, simplification of a device and reduction in manufacturing cost are taken into consideration. In this connection, description will be made about a quantum encryption device which has a symmetric configuration between a sender and receiver and which is composed of generally the same configuration common to both the sender and receiver. However, the present invention is not restricted to such a configuration at all. It goes without saying that a quantum encryption device can also be implemented wherein an arbitrary transmission device and arbitrary reception device of the following four embodiments are optionally combined.

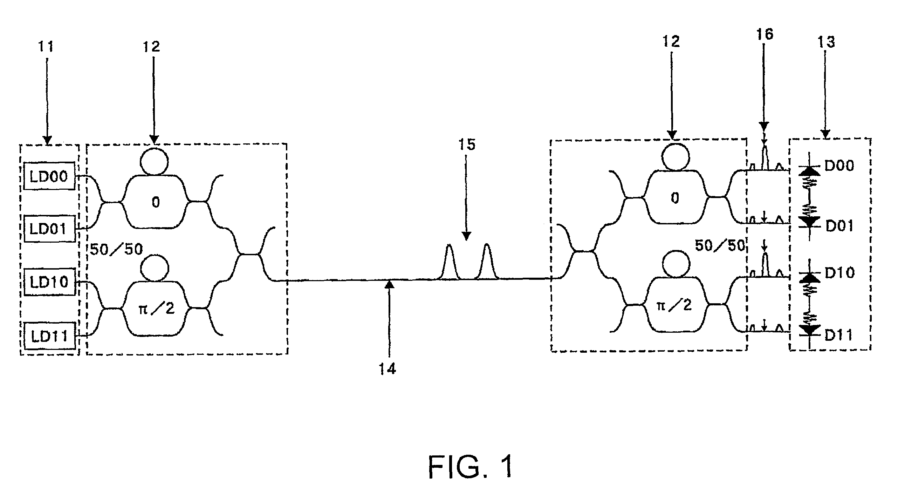

Fig. 1 is a configuration diagram of a quantum encryption device according to a first embodiment of the present invention. A transmission device includes a light source unit (11) structured by four sets of faint laser light sources for generating a photon serving as a qubit information carrier, and an interference unit (12) made up of two sets of asymmetric Mach-Zehnder interference systems configured of a PLC (Photonic Lightwave Circuit). On the other hand, a reception device is structured by an interference unit (12) made up of two sets of asymmetric Mach-Zehnder interference systems configured of a PLC, and a detection unit (13) made up of four sets of photon detectors (D00, D01, D10, and D11). Also, the transmission device and reception device are connected with an optical transmission path (14) for transmitting faint light. That is to say, the quantum encryption device shown in Fig. 1 is characterized in that four faint laser light sources on the transmission side, and two sets on the transmission and reception sides respectively, i.e., four sets of asymmetric Mach-Zehnder interference systems in total are provided, thereby eliminating the necessity of a phase modulator.

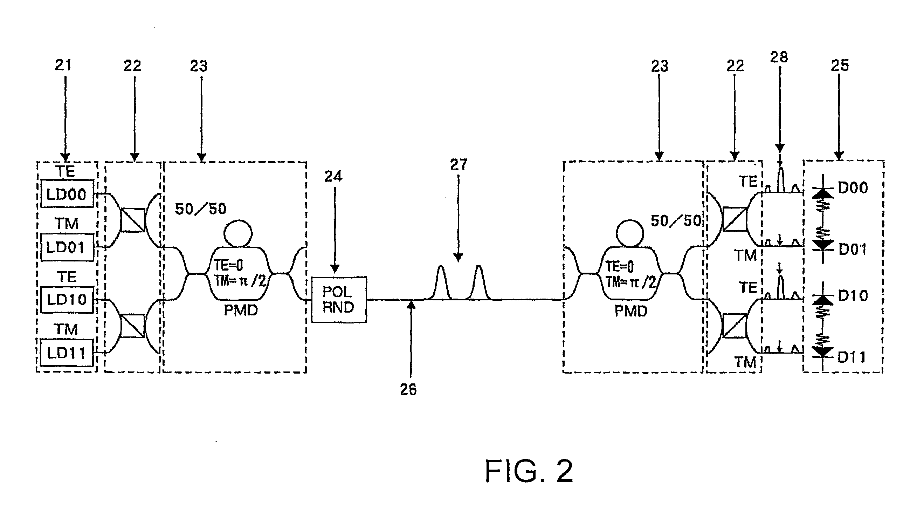

Fig. 2 is a configuration diagram illustrating a quantum encryption device according to a second embodiment of the present invention. A transmission device includes a light source unit (21) made up of four sets of faint laser light sources for generating a photon serving as a qubit information carrier, a polarization unit (22) made up of two sets of polarization beam splitters, an interference unit (23) made up of an asymmetric Mach-Zehnder interference system configured of a PLC, and a polarization plane scrambler (24) for disturbing a polarization plane.

On the other hand, a reception device is configured of an interference unit (23) made up of a single asymmetric Mach-Zehnder interference system made up of a PLC, a polarization unit (22) made up of two sets of polarization beam splitters, and a detection unit (25) made up of four sets of photon detectors. The transmission device and reception device are connected with an optical transmission path (26) for transmitting faint light. As evidenced from the drawing as well, the second embodiment is characterized in that two asymmetric Mach-Zehnder interference systems in total of the transmission device side and reception device side, and a polarization unit (22) having two sets of polarization beam splitters on the transmission device side and reception device side, respectively, are provided, thereby eliminating a phase modulator.

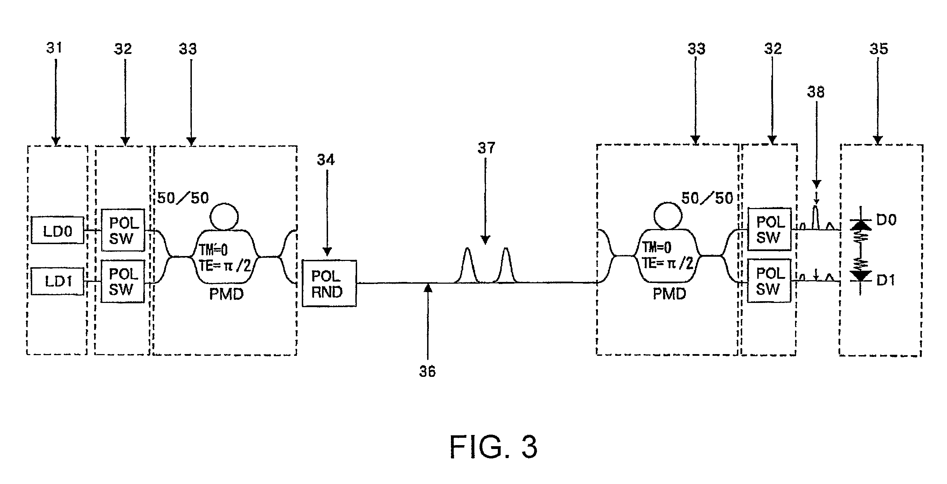

Fig. 3 is a configuration diagram illustrating a quantum encryption device according to a third embodiment of the present invention. A transmission device includes a light source unit (31) made up of two sets of faint laser light sources for generating a photon serving as a qubit information carrier, a switch unit (32) made up of two sets of polarization plane switches, an interference unit (33) made up of a single asymmetric Mach-Zehnder interference system structured by a PLC, and a polarization plane scrambler or randomizer (RND) (34) for disturbing a polarization plane.

On the other hand, a reception device is structured by an interference unit (33) made up of a single asymmetric Mach-Zehnder interference system formed by a PLC, a switch unit (32) made up of two sets of polarization plane switches, and a photon detection unit (35) made up of two sets of photon detectors. The transmission device and reception device are connected with an optical transmission path (36) for transmitting faint light. As evidenced from Fig. 3 as well, the third embodiment is characterized in that two asymmetric Mach-Zehnder interference systems in total of the transmission device side and reception device side, and a switch unit (32) having two sets of polarization plane switches on the transmission device side and reception device side, respectively, are provided, thereby eliminating a phase modulator.

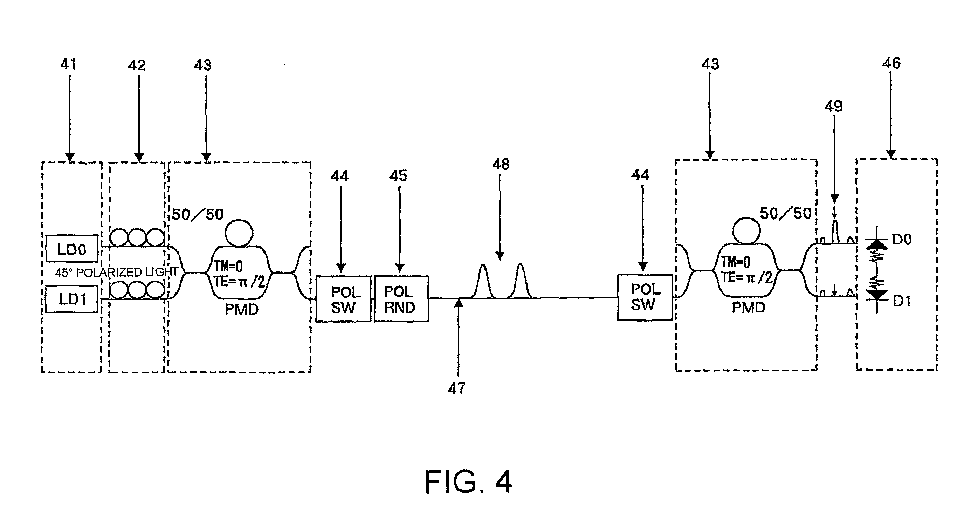

Fig. 4 is a configuration diagram illustrating a quantum encryption device according to a fourth embodiment of the present invention. A transmission device includes a light source unit (41) made up of two sets of faint laser light sources for generating a photon serving as a qubit information carrier, a polarization control unit (42) made up of two sets of polarization controllers, an interference unit (43) made up of a single asymmetric Mach-Zehnder interference system formed by a PLC, a switch unit (44) made up of a single polarization plane switch, and a polarization plane scrambler or randomizer (45) for disturbing a polarization plane.

A reception device is structured by a switch unit (44) made up of a single polarization plane switch, an interference unit (43) made up of a single asymmetric Mach-Zehnder interference system configured of a PLC, and a detection unit (46) made up of two sets of photon detectors. The transmission device and reception device are connected with an optical transmission path (47) for transmitting faint light. The example shown in Fig. 4 is provided with two asymmetric Mach-Zehnder interference systems (43) formed by a PLC in total of the transmission device side and reception device side, along with a polarization plane switch (44) and polarization plane scrambler (45), thereby eliminating the necessity of a phase modulator.

Though not shown in Figs. 1 through 4, the recording devices of each of the sender and the receiver can be structured by a personal computer, and also after distribution of a quantum encryption key, communication is performed through a classic communication path such as the common Internet or the like.

Description will be made below sequentially regarding the operations of the four embodiments of the present invention.

With the first embodiment of the present invention shown in Fig. 1, a regular sender selects a light source at random from the light source unit (11) structured by four sets of faint laser light sources for generating coherent light having the same wavelength λ, and faint short light pulses are emitted from the selected light source. When the short pulses are input to the two input ports of each of the asymmetric Mach-Zehnder interference systems, two coherent and continuous faint light pulses (two light pulses each of which the relative phase is clearly defined) having different relative phase by π can be prepared on the output port in accordance with selection of an input port.

Now, where m is an integer, and n is the effective index of a PLC waveguide, an interference unit (12) is structured by two sets of interference systems of which the optical path differences between the long length and short length differ by (m + 1 /2) λ / 2n. That is to say, if we say that the optical path difference between the long length and short length of one interference system making up the interference unit (12) is L1, and the optical path difference between the long length and short length of the other interference system is L2, the optical path difference between both interference systems is represented by L1 - L2 = (m + 1 / 2) λ / 2n. The output ports of the two sets of interference systems (12) are connected to the common optical transmission path with the optical coupler.

The two sets of interference systems forming the interference unit (12) respectively emit two continuous faint light pulses which belong to 0 base system: {0, π} and π/2 base system: {π/2, 3π/2} both of which are mutually conjugate base systems and which are sent to the optical transmission path in accordance with selection of an input port. Accordingly, the faint laser light source (11) is selected at random, thereby enabling preparation of four types of two coherent continuous faint light pulses (15) of which the relative phase is shifted by {0, π/2, π, 3π/2} necessary for quantum encryption employing nonorthogonal four states, on the optical transmission path at random.

On the other hand, the reception device includes the interference unit (12) made up of two sets of asymmetric Mach-Zehnder interference systems formed by a PLC having the same optical path difference between the long length and short length as that of the transmission device, and the input port thereof is connected to the optical transmission path (14) for transmitting faint light using the optical coupler. The presence of an arriving photon included in the central pulses of the three continuous faint light pulse output (16) from each of the interference systems is detected at the four sets of photon detectors (13).

At this time, the interference unit (12) can be controlled using a method such as temperature control such that the selected light source is completely correlated with the detector which detected a photon, in a case wherein selection of faint laser light sources (LD00 through LD11) at the light source unit (11) is {LD00 or LD01}, and also photon detection of the photon detectors (D00 through D11) at the detection unit (13) is {D00 or D01} (1/4 of whole event), and in a case wherein selection of faint laser light sources (LD00 through LD11) at the light source unit (11) is {LD10 or LD11}, and also photon detection of the photon detectors (13) is {D10 or D11} (1/4 of whole event).

With regard to other combinations between the selected light source and the detector which detected a photon other than those combinations, there is no correlation between both thoroughly, so the other combinations are not employed for generation of a secret key. The above-mentioned operation satisfies the necessary and sufficient conditions of a quantum encryption device employing nonorthogonal four states, so a safe secret key can be shared between a sender and receiver unconditionally in accordance with the proposed protocol.

According to this device configuration, a quantum encryption device can be configured simply wherein a high-speed signal modulator which selectively modulates one pulse of two continuous faint light pulses such as the related art is not needed at all, and all that is necessary is that the faint laser light source (11) making up the light source unit 11 is simply selected and driven. The precise control of the interference unit (12) is needed, but this can be readily solved by employing the PLC technology. The number of photon detectors is doubled in the above-mentioned configuration, so a dark count rate would be doubled due to a noise. However, no modulator is necessary, and an increase in noise can be substantially cancelled by elimination of the optical loss thereof.

Next, description will be made about the first embodiment of the present invention shown in Fig. 2. A regular sender selects a light source at random from the light source unit (21) structured by four sets of faint laser light sources (LD00 through LD11) for generating coherent light having the same wavelength λ, and faint short light pulses are emitted from the selected light source. The four sets of faint laser light sources LD00 and LD01, and LD10 and LD11 making up the light source unit (21) generate linearly-polarized faint pulsed light orthogonal mutually. Now, it is assumed that the faint laser light sources LD00 and LD10 generate TE polarized beams, and on the other hand, the faint laser light sources LD01 and LD11 generate TM polarized beams.

The faint pulsed light generated at the four sets of faint laser light sources LD00 and LD10, and LD01 and LD11 are input to two input ports of the single asymmetric Mach-Zehnder interference system formed by a PLC through the two sets of polarization beam splitters making up the polarization unit (22).

Specifically, the short pulsed light beams (TE polarized beams) emitted from the faint laser light sources LD00 and LD10 of the light source unit (21) have polarization planes in parallel with the substrate surface forming the interference unit (23), and on the other hand, the short pulsed light beams (TM polarized beams) emitted from the faint laser light sources LD01 and LD11 have polarization planes perpendicular to the substrate face of the interference unit (23). The interference unit (23) shown in the drawing is subjected to rough temperature adjustment by employing double refraction property of a silica waveguide such that the optical path difference between the long length and short length as to TE polarized light beams and TM polarized light beams becomes (m + 1 / 2) λ / 2n. Thus, the polarization plane of the input pulsed light of the interference unit (23) is selected, whereby the base system to which the two continuous faint light pulses to be prepared belong can be selected arbitrarily from the relative phase 0 base system: {0, π} and π/2 base system: {π/2, 3π/2}.

Simultaneously, the relative phase of output two continuous faint light pulses can be selected from {0, π} and controlled by selection of an input port. The two continuous faint light pulses pass through the polarization plane scrambler (24), whereby the correlation between the polarization plane of the two continuous faint pulses and the selected base is eliminated, and then the two continuous faint pulses are output to the optical transmission path (26) for transmitting faint light. According to the above-mentioned device configuration, the faint laser light sources (LD00 through LD11) are selected at random, thereby enabling preparation of four types of two coherent continuous faint light pulses (27) of which the relative phase is shifted by {0, π/2, π, 3π/2} necessary for quantum encryption employing nonorthogonal four states, on the optical transmission path at random.

On the other hand, the reception device includes the interference unit (23) formed by a single asymmetric Mach-Zehnder interference system of a PLC which has the same optical path difference between the long length and short length as that of the transmission device, and one of the input ports thereof is connected to the optical transmission path (26) for transmitting faint light. According to the two polarization beam splitters making up the polarization unit (22) connected to the downstream of the output port, the TE polarized light beams of the interference unit (23) are guided to the photon detectors D00 and D10, and the TM polarized light beams are guided to the photon detectors D01 and D11.

The presence of an arriving photon included in the central pulses of the three-ream faint light pulse output (28) of the polarization beam splitter of the polarization unit (22) is detected as the four sets of photon detectors (D00 through D11). The single asymmetric Mach-Zehnder interference system making up the interference unit (23) on the reception side is controlled with rough temperature adjustment in the same way as that on the transmission side such that the optical path difference between the long length and short length differs by (m + 1 / 2) λ / 2n according to selection of TE/TM polarization planes. At this time, the interference unit (23) can be controlled with minute temperature control such that the selected light source is completely correlated with the detector which detected a photon, in a case wherein selection at the light source unit (21) is faint laser light source {LD00 or LD01}, and also photon detection at the detection unit (25) is photon detector {D00 or D01} (1/4 of whole event), and in a case wherein selection at the light source unit (21) is faint laser light source {LD10 or LD11}, and also photon detection at the detection unit (25) is photon detector {D10 or D11} (1/4 of whole event). With regard to other combinations between the selected light source and the detector which detected a photon other than those combinations, there is no correlation between both thoroughly, so the other combinations are not employed for generation of a secret key.

The above-mentioned operation satisfies the necessary and sufficient conditions of a quantum encryption device employing nonorthogonal four states, so a safe secret key can be shared between a sender and receiver unconditionally in accordance with the proposed protocol.

According to this device configuration, a quantum encryption device can be configured simply wherein a high-speed signal modulator which selectively modulates one pulse of two continuous faint light pulses such as the related art is not needed at all, and all that is needed is that the faint laser light source (21) is simply selected and driven. The number of asymmetric Mach-Zehnder interference systems making up the interference unit (23) can be reduced as compared to the previously mentioned embodiment, but the optical loss by the polarization beam splitter (22) might increase. Also, the number of photon detectors is doubled, so the dark count rate might be doubled due to noise.

Next, description will be made regarding the embodiment shown in Fig. 3. A regular sender selects a light source at random from the two sets of faint laser light sources of the light source unit (31) for generating coherent light having the same wavelength λ, and faint short light pulses are emitted from the selected light source. The faint laser light sources making up the light source unit (31) generate linearly-polarized faint pulsed light beams of which the polarization is clearly defined, and the polarization plane thereof can be switched to TE and TM polarization defined by the interference unit (33) by the two sets of polarization switches making up the polarization unit (32). The polarization switches making up the polarization unit (32) can be structured by a polarization modulator and polarizer. The output light thereof is input to the two input ports of the interference unit (33) structured by the single asymmetric Mach-Zehnder interference system formed by a PLC.

The asymmetric Mach-Zehnder interference system forming the interference unit (33) is controlled with rough temperature adjustment such that the optical path difference between the long length and short length as to TE polarization light beams and TM polarization light beams differs by (m + 1 / 2) λ / 2n. Thus, the polarization plane of the input pulsed light beam of the asymmetric Mach-Zehnder interference system is selected by the polarization switch (POLSW) forming the polarization unit (32), whereby the base system to which the two continuous faint light pulses to be prepared belong can be selected arbitrarily from the relative phase 0 base system: {0, π} and π/2 base system: {π/2, 3π/2}. Simultaneously, the relative phase of output two continuous faint light pulses can be selected from {0, π} and controlled by selection of an input port. The two continuous faint light pulses pass through the polarization plane scrambler (34), whereby the correlation between the polarization plane of the two continuous faint pulses and the selected base is eliminated, and then the two continuous faint pulses are output to the optical transmission path (36) for transmitting faint light.

According to the above-mentioned device configuration, the operations of the faint laser light source and polarization switches are selected at random, thereby enabling preparation of four types of coherent two continuous faint light pulses (15) of which the relative phase is shifted by {0, π/2, π, 3π/2} necessary for quantum encryption employing nonorthogonal four states, on the optical transmission path at random.

On the other hand, the reception device includes the interference unit (33) made up of an asymmetric Mach-Zehnder interference system formed by of a PLC having the same optical path difference between the long length and short length as that of the transmission device, and one of the input ports thereof is connected to the optical transmission path (36) for transmitting faint light. The TE polarization component or TM polarization component of the output light of the interference unit (33) is selected by the polarization switch making up the polarization unit (32) connected to the downstream of the output port, and guided to the photon detectors D0 and D1 of the detection unit 35. The presence of an arriving photon included in the central pulses of the three continuous pulse output (38) of the polarization switch (POLSW) of the reception device is detected by the two sets of photon detectors of the detection unit 35. Like in the transmission side, the interference unit (33) of the reception device is controlled with rough temperature adjustment such that the optical path difference between the long length and short length differs by (m + 1 / 2) λ / 2n according to selection of TE/TM polarization plane.

At this time, the interference unit (33) can be controlled with minute temperature control such that the selected light source and the detector which detected a photon are correlated completely, in a case wherein selections of the polarization switch making up the polarization unit (32) of the transmission and reception devices are the same polarization (1/2 of whole event). On the other hand, in a case wherein selections of the polarization switch of the polarization unit (32) of the transmission and reception devices are different polarization (1/2 of whole event), there is no relation between the selected light source and the detector which detected a photon at all, so such a combination is not employed for generation of a secret key.

The above-mentioned operation satisfies the necessary and sufficient conditions of a quantum encryption device employing nonorthogonal four states, so a safe secret key can be shared between a sender and receiver unconditionally in accordance with the proposed protocol.

According to this device configuration, a high-speed signal modulator which selectively modulates one pulse of two continuous faint light pulses such as the related art is not needed at all, and all that is needed is that the polarization planes from the two faint laser light sources are selected by two sets of low-speed polarization switches capable of operating at a system repeating cycle. With the present embodiment, the interference unit (33) can be structured by only two asymmetric Mach-Zehnder interference systems, but optical loss due to the polarization switch making up the polarization unit (32) increases. However, with this embodiment, the number of photon detectors can be suppressed to two, so increase in noise due to a dark count rate can be prevented.

Lastly, the embodiment shown in Fig. 4 will be described. A regular sender selects a light source at random from the two sets of faint laser light sources of the light source unit (41) for generating coherent light having the same wavelength λ, and faint short light pulses are emitted from the selected light source. The light pulses are converted into an overlapped state of the equal weighted ratio of the TE and TM polarization defined by the asymmetric Mach-Zehnder interference system of the interference unit (43), e.g., circularly polarized light by a polarization configuring the polarization control unit (42).

The output light of the control unit (42) is input to the two input ports of the interference unit (43) made up of the single asymmetric Mach-Zehnder interference system configured of a PLC. The interference unit (43) is controlled by rough temperature adjustment such that the optical path difference between the long length and short length differs by (m + 1 / 2) λ / 2n as to the TM polarization light and TM polarization light. The TE or TM polarization component of the output light thereof is selected by the polarization switch of the polarization unit (44), and passed through the polarization plane scrambler (45). The selected component passed through the polarization plane scrambler (45) is output to the optical transmission path (47) for transmission of a faint light beam after elimination of the mutual relation between the polarization plane of the two continuous faint light pulses and the selected base. According to the above-mentioned device configuration, the polarization plane of the output pulsed light of the interference unit (43) is selected by the polarization switch, whereby the base system to which the two continuous faint light pulses to be prepared belong can be selected arbitrarily from the relative phase 0 base system: {0, π} and π/2 base system: {π/2, 3π/2}. Simultaneously, the relative phase of two output continuous faint light pulses can be selected from {0, π} and controlled by selection of an input port. Accordingly, the faint laser light sources (LD0, LD1) is selected at random, thereby enabling preparation of four types of two coherent continuous faint light pulses (48) of which the relative phase is shifted by {0, π/2, π, 3π/2} necessary for quantum encryption employing nonorthogonal four states, on the optical transmission path (47) at random.

On the other hand, the reception device includes the interference unit (43) made up of an asymmetric Mach-Zehnder interference system formed by a PLC having the same optical path difference between the long length and short length as that of the transmission device, and the input port thereof is connected to the optical transmission path (43) for transmitting faint light through the polarization switch (44) which selects and transmits the TE and TM polarization components defined by the interference unit (43). The TE or TM polarization component of the two continuous faint pluses (48) is selected with the polarization switch (44), and input to the single asymmetric Mach-Zehnder interference system making up the interference unit (43) which is controlled with rough temperature adjustment in the same way as that of the transmission device such that the optical path difference between the long length and short length differs by (m + 1 / 2) λ / 2n according to selection of TE/TM polarization plane. The TE polarization component or TM polarization component of the output light of the interference unit (43) is guided to the photon detectors (D0, D1) of the detection unit (46), and the presence of an arriving photon included in the central pulses of the three-ream pulsed output (49) is detected by the two sets of photon detectors (D0, D1) of the detection unit (46).

At this time, the interference unit (43) can be controlled with minute temperature control such that the selected light source and the detector which detected a photon are correlated completely, in a case wherein selections of the polarization switches (POLSW) at the polarization units (44) of the transmission and reception devices are the same polarization (1/2 of whole event).

In a case wherein selections of the polarization switches (POLSW) of the polarization units (44) of the transmission and reception devices are different polarization (1/2 of whole event), there is no relation between the selected light source and the detector which detected a photon at all, so such a combination is not employed for generation of a secret key.

The above-mentioned operation satisfies the necessary and sufficient conditions of a quantum encryption device employing nonorthogonal four states, so a safe secret key can be shared between a sender and receiver unconditionally in accordance with the proposed protocol.

According to this device configuration, a high-speed signal modulator which selectively modulates one pulse of two continuous faint light pulses such as the related art is not needed at all, and all that is necessary is that the polarization plane of the faint laser light source of the light source unit (41) is selected by a low-speed polarization switch (44) capable of operating at a system repeating cycle. The number of interference units (43) can be suppressed to two, but optical loss due to the polarization switch (POLSW) of the polarization unit (44) increases. With this embodiment, the number of photon detectors (D0, D1) can be suppressed to two, so an increase of a dark count rate due to noise can be prevented. Note that description has been made regarding a case wherein the transmission devices according to the first through fourth embodiments are combined with the reception devices according to the first through fourth embodiments respectively, but the transmission devices according to the first through fourth embodiments can be combined with a reception device according to another embodiment.

The common features of the present invention are in that a high-speed signal modulator such as the related art is unnecessary, or all that is necessary is low-speed signal modulator capable of operating at a system repeating cycle, the configuration of a device to be possessed by a regular user can be simplified, and handling thereof can be readily performed in combination with application of an asymmetric Mach-Zehnder interference system configured of a PLC. Accordingly, economic and technologic burden for the device of a regular user and operation of the device can be extremely reduced as compared to the quantum encryption devices disclosed in Non-patent Documents 1 through 6.

The quantum encryption device can distribute an encryption key covering a long distance with a simple device configuration, and greatly counts towards a high-security communication system.

## Claims

1. A quantum encryption device comprising:
a transmission side for transmitting a photon serving as a qubit information carrier; and
a reception side for receiving said photon, which is connected to said transmission side through an optical transmission path;
wherein three or more asymmetric Mach-Zehnder interference systems each formed by a photonic lightwave circuit (PLC) are provided on said transmission side and said reception side, so as to dispense with both of phase modulators on said transmission side and said reception side.

2. The quantum encryption device according to Claim 1, said transmission side comprising:
four sets of faint laser light sources for generating coherent pulsed light having the same wavelength; and
two sets of asymmetric Mach-Zehnder interference systems each formed by said PLC;
wherein said two sets of asymmetric Mach-Zehnder interference systems have the differences between long length and short length which mutually differ from each other.

3. The quantum encryption device according to Claim 2, wherein when the differences between long length and short length of said two sets of asymmetric Mach-Zehnder interference systems each formed by said PLC are shown by L1 and L2, L1 - L2 is represented with the following expression:
L1 - L2 = (m + 1 / 2) λ / 2n (where m is an integer, n is the execution refractive index of a waveguide making up each of the asymmetric Mach-Zehnder interference systems, and λ is the wavelength of said coherent light).

4. The quantum encryption device according to Claim 3, wherein the coherent light of said four sets of faint laser light sources is selected at random, and input to said two sets of asymmetric Mach-Zehnder interference systems each formed by said PLC, and two continuous faint light pulses having nonorthogonal four states are transmitted onto said optical transmission path.

5. The quantum encryption device according to any of Claims 1 through 4, said reception side comprising:
two sets of asymmetric Mach-Zehnder interference systems each formed by said PLC; and
four sets of photon detectors.

6. The quantum encryption device according to any of Claims 1 through 4, said reception side comprising:
a single asymmetric Mach-Zehnder interference system which is formed by said PLC, and connected to said optical transmission path;
two polarization beam splitters connected to the two output ports of the relevant single asymmetric Mach-Zehnder interference system; and
four sets of photon detectors.

7. The quantum encryption device according to any of Claims 1 through 4, said reception side comprising:
a single asymmetric Mach-Zehnder interference system which is formed by said PLC, and connected to said optical transmission path;
two polarization switches for selecting the TE and TM polarization components of output light, which are connected to the two output ports of the relevant single asymmetric Mach-Zehnder interference system; and
two sets of photon detectors.

8. The quantum encryption device according to any of Claims 1 through 4, said reception side comprising:
a polarization switch for selecting the TE or TM polarization component of light pulses on said optical transmission path, the polarization switch being connected to said optical transmission path and;
a single asymmetric Mach-Zehnder interference system which is formed by said PLC, and connected to said polarization switch; and
two sets of photon detectors.

9. A quantum encryption device comprising:
a transmission side for transmitting a photon serving as a qubit information carrier; and
a reception side for receiving said photon as two continuous faint light pulses, which is connected to said transmission side through an optical transmission path;
wherein two or more asymmetric Mach-Zehnder interference systems each formed by a photonic lightwave circuits (PLC), and a polarization beam splitter or polarization switch for switching a polarization plane are provided on said transmission side and said reception side, so as to dispense with both of phase modulators on said transmission side and said reception side.

10. The quantum encryption device according to Claim 9, said transmission side comprising:
two sets (four in total) of faint laser light sources for generating linearly-polarized coherent pulsed light beams having the same wavelength, the linearly-polarized coherent pulsed light beams being orthogonal to each other;
two polarization beam splitters for selecting the polarization plane of the linearly-polarized wave faint pulses output from said two sets of light sources; and
a single asymmetric Mach-Zehnder interference system which is formed by a PLC, and connected to said two polarization beam splitters.

11. The quantum encryption device according to Claim 9, said transmission side comprising:
two sets of faint laser light sources for generating coherent light having the same wavelength;
two polarization switches for selecting mutually different polarization light beams, the two polarization switches being connected to said two light sources respectively; and
a single asymmetric Mach-Zehnder interference system which is formed by said PLC, and connected to said two polarization switches.

12. The quantum encryption device according to Claim 9 or 11, said transmission side comprising:
a polarization scrambler connected between a single output port of said single asymmetric Mach-Zehnder interference system and said optical transmission path.

13. The quantum encryption device according to Claim 9, said transmission side comprising:
two sets of faint laser light sources for generating coherent light having the same wavelength;
a polarization controller for selecting coherent light from said two sets of light sources, and the polarization plane of the selected coherent light into circular polarization light;
a single asymmetric Mach-Zehnder interference system which is formed by said PLC, and connected to said polarization controller; and
a polarization switch connected to said single asymmetric Mach-Zehnder interference system and said optical transmission path.

14. The quantum encryption device according to Claim 13, said transmission side comprising:
a polarization scrambler connected between said polarization switch and said optical transmission path.

15. The quantum encryption device according to any of Claims 9 through 14, said reception side comprising:
a single asymmetric Mach-Zehnder interference system formed by a PLC.
